# EUROPEAN PATENT SPECIFICATION

(11) **EP 3 990 759 B1**
(45) Date of publication and mention of the grant of the patent: **09.10.2024**
(21) Application number: 20735330.1
(22) Date of filing: 26.06.2020
(51) Int. Cl.: F01N 3/021, F01N 13/00, F01N 13/18

(54) **FILTER DEVICE**
FILTERVORRICHTUNG
DISPOSITIF DE FILTRE

(30) Priority: 28.06.2019 EP 19183390
(43) Date of publication of application: 04.05.2022
(73) Proprietor: Dinex A/S, 5500 Middelfart (DK)
(72) Inventor: BEBE, Jim Elkjaer, 5500 Middelfart (DK); ANDERSEN, Kasper Steen, 5500 Middelfart (DK); RANAWAT, Mahipat Balwant, 5500 Middelfart (DK); MÅRTENSSON, Rasmus Møller, 5500 Middelfart (DK)
(74) Representative: Nex & Phister Law & IP Aps
(86) International application number: PCT/EP2020/068067
(87) International publication number: WO 2020/260610

(56) References cited:
- EP-A1- 2 151 560
- EP-B1- 2 151 560
- WO-A1-2014/008930
- DE-A1- 102013 100 454
- DE-B3- 102012 207 960
- US-A1- 2005 077 104

## Description

### FIELD OF THE INVENTION

Removing, cleaning and replacing filters in boxed after-treatment systems can either be done side-out, i.e. radially to the filter flow axis, or end-out, i.e. axially to the filter flow axis. In particular, the present invention relates to an end-out service filter device for an exhaust after-treatment system of a combustion engine.

### BACKGROUND OF THE INVENTION

The acceptable limits for exhaust emissions of vehicles are being reduced and thus, the introduction of filter elements or similar in the exhaust line of vehicles is necessary in order to meet the emissions regulations. Among other exhaust gas cleaning and filtering devices, the use of particulate filters, which reduce the particulate matter contained in the exhaust gases of a combustion engine, is increasing. Particulate matter accumulates within the filter over time, and therefore the filter may need to be serviced or even replaced with a new one. Therefore it is important to provide a service filter device for an exhaust after-treatment system of a combustion engine which can be easily serviced while minimizing physical space requirements, flow path obstructions, risk of bypass of the particulate matter and keeping a good integrity of the insulation and good leak tightness. Servicing an end-out filter usually requires exposure of the internal parts of the filter device. The present invention allows for end-out service of the filter device while taking all of the aforementioned concerns into careful consideration.

Several inventions have been proposed to provide a service filter device that takes into account all of the above. EP 2233708 A1 discloses an exhaust gas-treating device for an exhaust system of an internal combustion engine, especially of a motor vehicle. Said exhaust gas-treating device has a housing, which has a jacket extending circumferentially on the side and two end-side end bottoms. Maintenance is simplified with at least one mounting tube, which passes through one or the first end bottom and into the outlet end of which a particle filter is plugged axially from the outside, with a deflecting housing. The deflecting housing contains a deflecting chamber, and has at least one inlet communicating with the deflecting chamber and at least one outlet communicating with the deflecting chamber. A fastening device is provided for detachably fastening the respective inlet at the respective outlet end of the mounting tube.

Publication WO2014/008930A1 discloses another exhaust system with a removable filter.

### SUMMARY OF THE INVENTION

The present invention solves many of the problems with the prior art end-out service filter devices for after-treatment systems of combustion engines, while differentiating itself from existing end-out service filter devices. The result is an end-out service filter device that meets the functionality requirements, but is also easy to manufacture and can be scaled to fit any filter or substrate size. The arrangement of the end-out service filter device object of the present invention, although being especially suitable for particulate filters, in particular Diesel Particulate Filters (DPF) or Gasoline Particulate Filters (GPF), can also be used for any substrate (Diesel Oxidation Catalyst (DOC), Selective Catalytic Reduction (SCR), Three-Way Catalyst (TWC), etc.).

The present invention concerns a new end-out service filter device which can be part of the exhaust after-treatment system of a vehicle. In the after-treatment system exhaust gas containing particulate matter out of a combustion engine typically passes through an oxidation catalyst and is then filtered through a particulate filter, typically a Diesel Particulate Filter (DPF) or a Gasoline Particulate Filter (GPF). The particulate matter filtered by the particulate filter accumulates inside the filter unit. Accumulated particulate matter typically comprises ash and soot. Soot usually accumulates within the filter walls and can be burned out, whereas ash usually accumulates inside the filter channels and must be blown out. Blow out of ash requires blowing gas through the filter's outlet side. Therefore, usually the filter must be removed from the after-treatment system. The end-out service filter device of the present invention allows for an easy and speedy removal of the filter from the after-treatment system, while keeping good leak tightness.

It is the object of the present invention to provide an end-out service filter device for an exhaust after-treatment system according to claim 1.

In an embodiment the lid fixing means comprise a V-clamp. Preferably the lid fixing means further comprise a gasket.

In a still further embodiment the filter unit fixing means comprise a V-clamp. Preferably the filter unit fixing means further comprise a gasket.

In a still further embodiment the end-out service filter device further comprises an end baffle.

In a still further embodiment the service opening is defined by a flange of the end baffle. Alternatively the service opening is defined by a flange of the flow transfer device.

In a still further embodiment the service lid is coaxial with the filter unit.

In a still further embodiment the service lid comprises insulation.

In a still further embodiment the service lid comprises a wall that is arranged such that it deflects the exhaust gases of the combustion engine. Preferably, said wall of the service lid is arranged such that it deflects the exhaust gases exiting the filter unit. Alternatively, said wall of the service lid is arranged such that it deflects the exhaust gases towards the filter unit.

In a still further embodiment the end-out service filter device further comprises a support ring for the filter unit.

According to claim 1, the removable lid comprises guiding means for correctly positioning said removable lid on the service opening. The guiding means comprises a protrusion located in the service opening which fits a respective recess in the removable lid.

In a still further embodiment the flow transfer device comprises insulation.

In a still further embodiment the outlet of the filter unit housing is located inside the flow transfer device.

In a still further embodiment the filter unit comprises a Diesel Particulate Filter (DPF). Alternatively the filter unit comprises a Gasoline Particulate Filter (GPF).

In a still further embodiment the filter unit comprises a Selective Catalytic Reduction catalyst on Filter (F-SCR). Preferably said filter is a particulate filter. More preferably said filter is a Diesel Particulate Filter (DPF) or a Gasoline Particulate Filter (GPF).

In a still further embodiment the filter unit comprises a catalytic element. Preferably said catalytic element is a Diesel Oxidation Catalyst (DOC), a Selective Catalytic Reduction (SCR) catalyst and/or a Three-Way Catalyst (TWC).

Further objects and advantages of the present invention will appear from the following description, and claims.

### BRIEF DESCRIPTION OF DRAWINGS

Figure 1 is a perspective view of an exemplary embodiment of an end-out service filter device for an exhaust after-treatment system of a combustion engine according to the present invention.
Figure 2 is an exploded perspective view of the embodiment of an end-out service filter device shown in Figure 1.
Figure 3 is a front view of the embodiment of an end-out service filter device shown in Figures 1 and 2.
Figure 4 is a section view through the cutting plane line A-A shown in Figure 3.
Figure 5 is the detail view B shown in Figure 4.
Figure 6 is a detail view of the lid fixing means shown in Figure 4.
Figure 7 is a detail view of the filter unit fixing means shown in Figure 4.
Figure 8 is a perspective view of a first exemplary embodiment of an after-treatment system of the exhaust gases of a combustion engine according to the present invention.
Figure 9 is a perspective view with a partial cross-section of the embodiment of an after-treatment system shown in Figure 8.
Figure 10 is a schematic view of the embodiment of an after-treatment system shown in Figures 8 and 9.
Figure 11 is a schematic view of a second exemplary embodiment of an after-treatment system of the exhaust gases of a combustion engine according to the present invention.
Figure 12 is a schematic view of a third exemplary embodiment of an after-treatment system of the exhaust gases of a combustion engine according to the present invention.

### DESCRIPTION OF THE INVENTION

There are many advantages of the present invention in a broad context as well as even more advantageous aspects of the embodiments.

Exhaust gases coming from a combustion engine generally comprise suspended particulate matter, which for environmental reasons, needs to be removed before the exhaust gases are emitted to the atmosphere. The reduction, total or partial, of the particulate matter contained in exhaust gases is usually achieved by particulate filters. Particulate matter accumulates within the particulate filter, which needs to be serviced or replaced periodically. Therefore it is important to provide a filter device which allows for an easy service or replacement of its particulate filter. Several of prior art devices have been proposed to achieve this. Removing, cleaning and replacing filters in boxed after-treatment systems can either be side-out, that is radially to the filter flow axis, or end-out, which is axially to the filter flow axis. Servicing or replacing a filter end-out requires exposure of the system internals. It is thus required a compromise between integrity of the insulation, physical space, flow path obstructions, leak tightness and particulate matter bypass risk.

The present invention relates to an end-out service filter device which achieves all the above, while differentiating itself from existing devices. The result is an end-out service filter device that meets the functionality requirements, but is also easy to manufacture, can be scaled to fit any filter or substrate size, and although it is particularly advantageous for particulate filters, the arrangement of the end-out service filter device of the present invention can also be used for any substrate, for example, Diesel Oxidation Catalyst (DOC), Selective Catalytic Reduction catalyst (SCR), Three-Way Catalyst (TWC), etc.

The end-out service filter device object of the present invention allows for removal and/or insertion of the filter through a flow transfer device via a service lid, which is preferably shaped taking into consideration the flow of exhaust gases going through the flow transfer device and may be insulated between a double skin. The service lid is preferably removed by removing a V-clamp. A trapezoidal gasket may be used together with the V-clamp in order to ensure a leak tightness fixation of the service lid. Once the service lid has been removed, the user or technician gains access to an internal V-clamp that secures the filter unit in place. The use of an internal V-clamp or equivalent removes, or at least greatly minimizes, the risk for particulate bypass of the filter unit. After removal of the internal V-clamp the filter unit can be removed and serviced or replaced. The end-out service filter device may further comprise a fixation or support ring which ensures the axial alignment of the filter unit when a new or serviced filter is inserted, ensuring a tight clamped connection of the filter unit to the end-out service filter device. In case of a fully insulated after-treatment system an end baffle may sit on top of the flow transfer device. In this case, a collar may be fitted on the end baffle for the clamped connection.

The terms "service lid" and "removable lid" as used herein are equivalent and interchangeable.

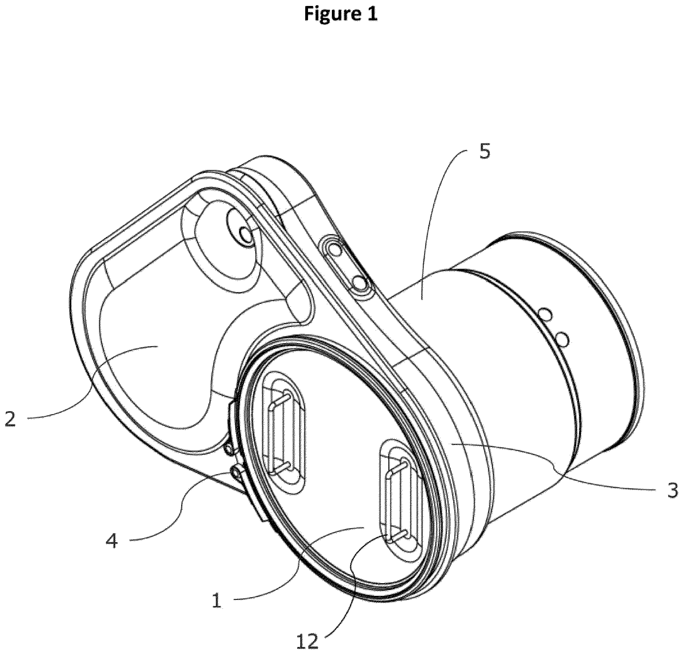

The device according to the present invention will now be described in more detail with regard to the accompanying figures 1-9. The figures show one way of implementing the present invention and is not to be construed as being limiting the present invention in any way.

Material to be used can be stainless steel that has low thermal expansion, is corrosion resistant and has good formability and weldability.

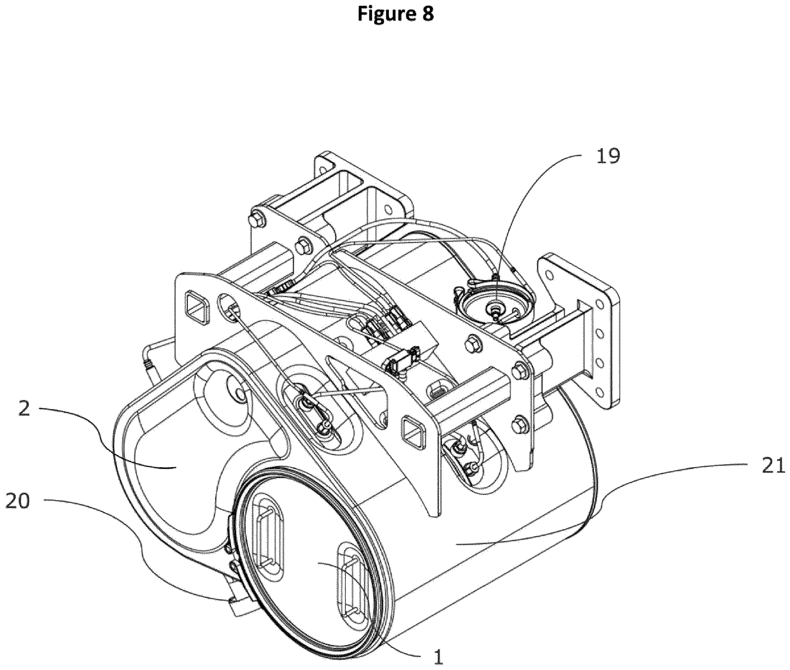

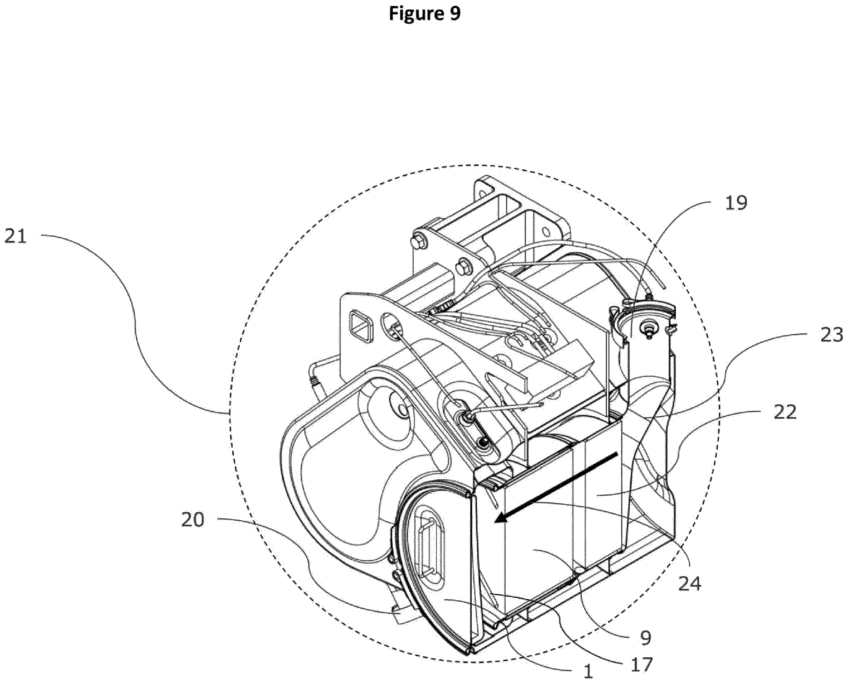

Figure 1 shows a perspective view of an exemplary embodiment of an end-out service filter device for an exhaust after-treatment system of a combustion engine according to the present invention. The embodiment shown comprises a service or removable lid (1) having at least one, preferably two, service lid handle (12), which aids in the handling of the removable lid (1). Said at least one service lid handle (12) is completely optional. Said removable lid (1) is secured to the end-out service filter device, and more precisely, to the end baffle (2) and the flow transfer device (3), via lid fixing means that, in this embodiment, comprise an external V-clamp (4). Said external V-clamp (4) will be described with more detail hereinafter. Figure 1 also shows the external side of the filter unit housing (5). The end baffle (2) of the embodiment shown is also an optional element of the end-out service filter device of the present invention and is preferably designed and shaped so that it sits flush with the housing of an exhaust after-treatment system of a combustion engine (see Figures 8 and 9), thus aiding in the fixation of the end-out service filter device to the after-treatment system.

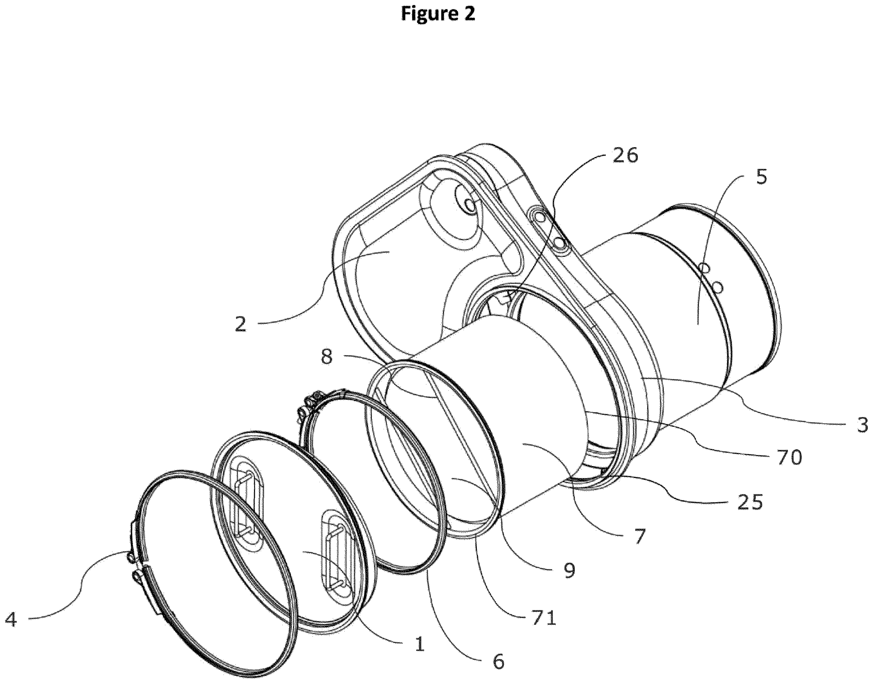

Figure 2 shows an exploded perspective view of the embodiment of an end-out service filter device shown in Figure 1, so that internal components of the end-out service filter device, e.g. the internal V-clamp (6) and the filter unit (7), can be seen. Filter units have at least one inlet and at least one outlet. In this embodiment, the filter unit (7) has an outlet (71) and an inlet (70) of exhaust gases of the combustion engine, which are located on opposite ends of said filter unit (7). However, in other embodiments the filter unit (7) can have more than one inlet (70) and/or more than one outlet (71) of exhaust gases coming from the combustion engine, which may also have a different arrangement than the one of the embodiment shown in Figure 2.

The removable lid (1) of the embodiment shown in Figure 2 is circular. However, in other embodiments of the end-out service filter device the removable lid (1) can have other geometric configurations, such as triangular, rectangular, hexagonal, octagonal, etc., as long as it allows for the removal of the filter unit (7). Although not necessary, the geometric configuration of the filter unit (7) preferably matches the one of the service lid (1), for example, if the removable lid (1) is circular, the filter unit is cylindrical or if the removable lid (1) is squared, the filter unit (7) is prismatic, etc. The shape and dimension of the service lid (1) needs to be such that it allows the removal of the filter unit (7), irrespective of the geometric configuration and size of said filter unit (7). The service opening (25) closed by the service lid (1) preferably has the same geometric configuration of said service lid (1). Moreover, said service opening (25) is dimensioned such that it allows the removal of the filter unit (7) from the end-out service filter device. Although completely optional, the embodiment shown comprises guiding means for correctly positioning the removable lid (1) on the service opening (25). Said guiding means takes the form of a protrusion (26) located in the service opening (26) which fits a respective recess, not shown, in the removable lid (1), and thus, the removable lid (1) can only be closed when its recess matches its respective protrusion (26). Other guiding means can also be used. As can be seen, in the exemplary embodiment shown, the removable lid (1), the service opening (25) and the filter unit (7) are axially aligned.

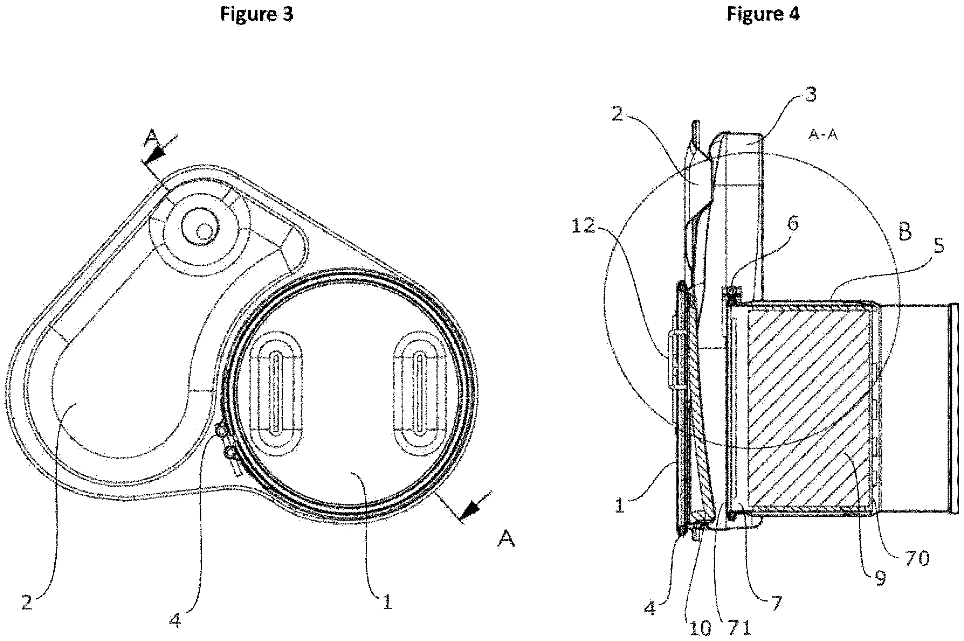

Figure 3 shows a front view of the embodiment of an end-out service filter device shown in Figures 1 and 2. This figure shows the relative arrangement of the removable lid (1) and its external V-clamp (4), in relation to the end baffle (2). As can be seen, the cutting plane line A-A is also depicted.

Figure 4 shows a section view through the cutting plane line A-A shown in Figure 3. This section view shows the longitudinal arrangement of the internal components, or at least part of them, of the embodiment of an end-out service filter device shown in Figures 1 to 3. On the left side, which equals to the external side of the exhaust after-treatment system, see Figures 8 and 9, there is located the service lid (1) with its handles (12) closing the service opening (25), see Figure 2. The service lid (1) is secured by means of an external V-clamp (4), which attaches the service lid (1) to the end baffle (2) and the flow transfer device (3). In the embodiment shown, the filter unit (7) is secured to the filter unit housing (5) by means of an internal V-clamp (6). The filter unit (7) can comprise different types of filters. However, in the embodiment shown the filter unit (7) comprises a Diesel Particulate Filter (9). As can be seen, the arrangement of the components of the end-out service filter device is such that the filter unit (7) when being inserted or extracted from said end-out service filter device passes through the flow transfer device (3).

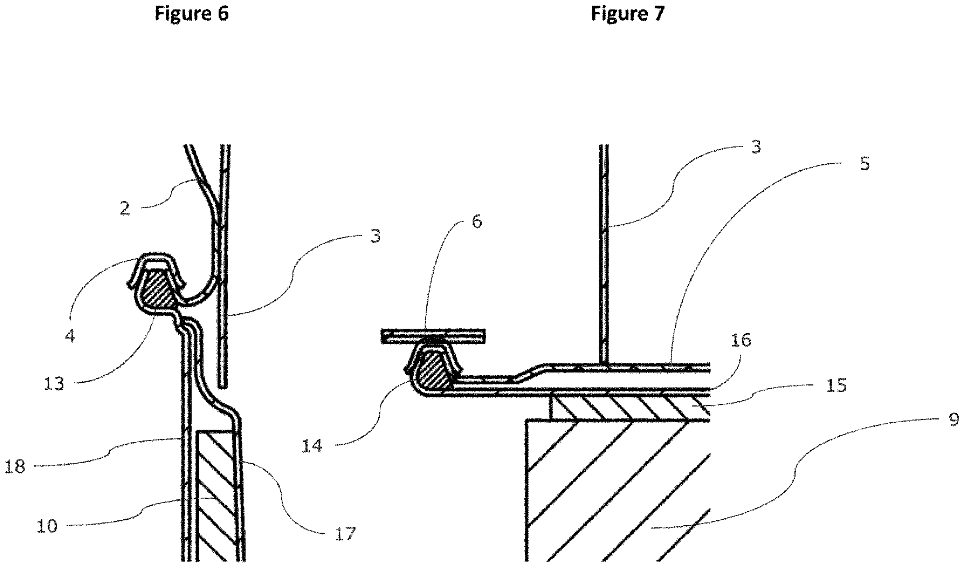

In the embodiment shown the service lid (1) further comprises an insulation layer (10). The insulation helps minimizing the heat loss of the exhaust gases, in order to achieve a good after-treatment of the exhaust gases. However, although is highly recommended to have the service lid (1) insulated, embodiments lacking of insulation in the service lid (1) also meet the functional requirements. In this case, the insulation layer (10) is covered by the service lid inner structure (17), see Figure 6, which acts as a flow deflecting wall arranged such that it deflects the exhaust gases exiting or entering the filter unit (7) through its outlet (71) to/from the flow transfer device (3). In this exemplary embodiment, the service lid (1) faces the outlet (71) of the filter unit (7).

In order to ease the extraction of the filter unit (7), in the embodiment shown the service lid (1) and the filter unit (7) are aligned.

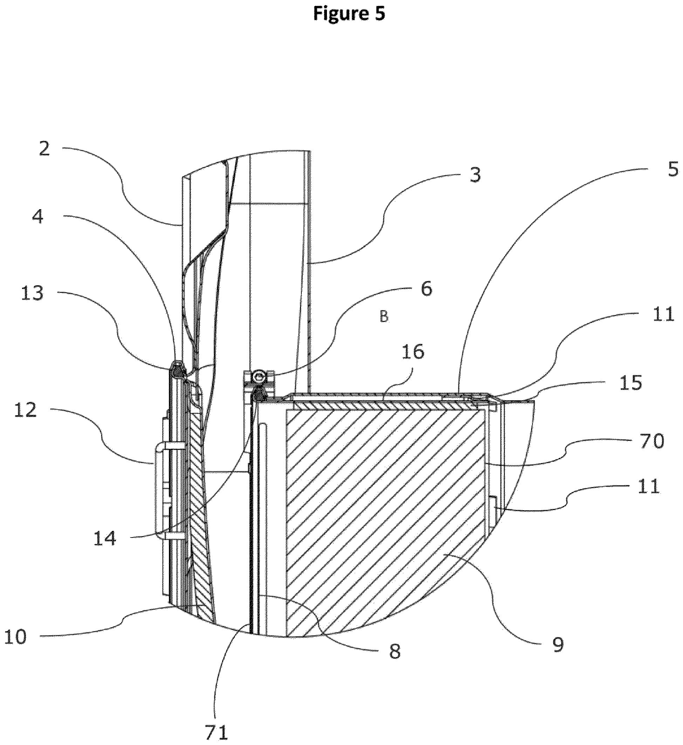

Figure 5 shows the detail view B marked in Figure 4, so that the details of the fixation of the service lid (1) and the filter unit (7) can be seen. The filter unit filters the particulate matter contained in the exhaust gases of a combustion engine, and as the particulate matter accumulates within the filter, it may need to be serviced or replaced. In order to ease the service or replacement of the filter unit (7), said filter unit (7) is secured to the filter unit housing (5) by means of an internal V-clamp (6), which may comprise a quick release mechanism. Together with the internal V-clamp, there may be provided an interior trapezoidal gasket (14) to ensure a leak tight fixation of the filter unit (7), guaranteeing that the exhaust gases, and its particulate matter, do not bypass the particulate filter. Located within the filter unit housing (5) there is located a fixation or support ring (11) which ensures the axial alignment of the filter unit (7), and therefore a tight clamped connection. In order to ease the extraction and insertion of the filter unit (7), said filer unit (7) may comprise a filter unit handle (8) which aids in the manipulation of the filter unit (7) when being inserted into the end-out service filter device and when being extracted from it. The filter unit (7) may comprise a filter sleeve (16), which may be the external part of the filter unit (7) and, among other, give structural rigidity to it. The filter sleeve (16) may contain the particulate filter, which in the embodiment shown is a Diesel Particulate Filter (9). Between the particulate filter and the filter sleeve (16) there may be located a filter support mat (15), which aids in the fixation of the particulate filter to the inner side of the filter sleeve (16).

In a similar manner to the internal V-clamp (6), the external V-clamp (4) may comprise a quick release mechanism and may also be provided with a trapezoidal gasket (13) in order to guarantee a leak tight fixation of the service lid (1).

In the embodiment shown, the outlet (71) of the filter unit (7) is located inside the flow transfer device (3). However, said outlet could also be arranged so that it sits flush, or at least substantially flush, with the inner back wall, i.e. the one opposite to the service lid, of the flow transfer device (3).

Referring to Figure 6, it can also be seen the structure of the service lid (1), which is formed by a service lid outer structure (18) and a service lid inner structure (17). The inner structure (17) should be understood as the structure (17) of the service located inside the end-out service filter device, that is to say, facing the flow of exhaust gases going through the particulate filter. The outer structure (18) should be understood as the structure (18) of the service lid located on the outside of the end-out service filter device. Between the service lid outer structure (18) and the inner structure (17) there may be located a service lid insulation layer (10), which aids in minimizing the heat loss of the exhaust gases. As stated hereinabove, said service lid outer structure (18) may have one or more handles (12). Said inner structure (17) may be shaped such that it acts as a flow deflecting wall, that is to say, it is shaped such that it deflects the flow of exhaust gases exiting or entering the filter device to/from the flow transfer device (3).

The service opening (25), see Figure 2, of the embodiment shown is defined by a flange of the end baffle (2). The service lid outer structure (18) comprises a further flange. The external V-clamp (4) couples said flanges, thereby closing the service lid (1). In order to ensure a leak tight closure, an external trapezoidal gasket (13) may be arranged between said flanges. The end baffle (2) may be joined to the flow transfer device (3), for example, by welding. As has been described hereinabove, the embodiment shown in Figures 1 to 9 comprises an end baffle (2), which is an optional element of the end-out service filter device object of the present invention. In embodiments which lack of said end baffle (2) the service opening (25) may be defined by a flange in the flow transfer device (3), similar to the one of the end baffle (2) shown in Figure 6.

Figure 7 shows a detail view of the filter unit fixing means shown in Figures 2, 4 and 5. The filter unit housing (5) may comprise a flange which defines an opening through which the filter unit (7) is inserted and/or extracted. The flange of the filter unit housing (5) may be similar to the one of the end baffle (2) or the flow transfer device (3). The filter sleeve (16) of the filter unit (7) may comprise a further flange, which may be similar to the flange of the service lid (1). The internal V-clamp (6) couples the flange of the filter unit housing (5) and the flange of the filter sleeve (16), thereby securing the filter unit (7) and its particulate filter to the filter unit housing (5), which is an integral part of the end-out service filter device object of the present invention. Similarly to the service lid fixing means, the filter unit fixing means may comprise an internal trapezoidal gasket (14), in order to ensure a leak tight fixation of the filter unit (7) to the filter unit housing (5). The flow transfer device may be joined to the filter unit housing, preferably by welding.

Although the exemplary embodiment shown hereinabove uses a V-clamp as lid fixing means and a further V-clamp as filter unit fixing means, in other embodiments different fixing means can be used, for example, band clamps, screws, etc. In the embodiments that use V-clamps as lid fixing means and/or filter unit fixing means, said V-clamps can have different closure mechanisms, for example, a T-bolt latch, a quick coupler latch, a bolted flange, a toggle lever, etc.

Figure 8 shows a perspective view of a first exemplary embodiment of an after-treatment system of the exhaust gases of a combustion engine according to the present invention, which comprises the exemplary embodiment of an end-out service solution according to the present invention shown in Figures 1 to 7. As can be seen, in this embodiment the end baffle (2) sits flush with the housing of the exhaust gas after-treatment system (21), thus aiding in the fixation of the end-out service filter device to the exhaust after-treatment system (21). On the upper side of the exhaust gas after-treatment system (21) there is located the exhaust gases inlet (19) whereas the exhaust gases outlet (20) is located on the lower side of it.

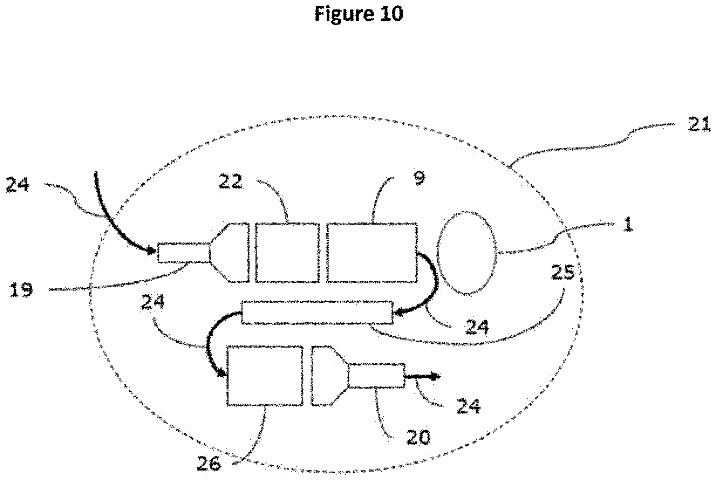

Figure 9 shows a perspective view with a partial cross-section of the embodiment of an after-treatment system of exhaust gases shown in Figure 8. Figure 9 shows the flow path (24) of the exhaust gases going through the exhaust gas after-treatment system (21). After entering the exhaust gas after-treatment system (21) through the inlet (19), the flow of exhaust gases may be directed to the oxidation catalyst, which in the embodiment shown is a Diesel Oxidation Catalyst (22). This may be done by a Diesel Oxidation Catalyst inlet cone (23), which is preferably mounted on the exhaust gas after-treatment system (21) of the present invention. After going through the Diesel Oxidation Catalyst (22) exhaust gases enter the particulate filter, which in the embodiment shown is a Diesel Particulate Filter (9), so that the particulate matter contained in the exhaust gases is retained in said particulate filter. After exiting the particulate filter, the flow of exhaust gases is directed to the flow transfer device (3), not shown in this figure. This may be done by the inner structure (17) of the service lid (1) which may act as a flow deflecting wall. From the flow transfer device (3) the exhaust gases may be directed to the outlet (20) of the exhaust gas after-treatment system (21). However, as can be seen more clearly in Figure 10, in the first exemplary embodiment the flow (24) of exhaust gases leaving the flow transfer device (3) are directed to a mixing device (25) and subsequently to a Selective Catalytic Reduction (SCR) catalyst (26) before leaving the after-treatment system (21) through the outlet (20) of exhaust gases. The inlet (19) of exhaust gases of the exhaust gas after-treatment assembly is preferably perpendicular to the longitudinal axis of the particulate filter.

The hereinabove shown arrangement of the flow transfer device (3) allows for insulation to sit "on top", such that the flow path from the inlet (19) to the outlet (20) of the exhaust gas after-treatment system (21) may be insulated (with the exceptions of the fixation points and the clamp connections).

Figure 10 shows schematically the first exemplary embodiment of an after-treatment system (21) of exhaust gases coming from a combustion engine shown in Figures 8 and 9, so that the layout of said first exemplary embodiment of an after-treatment system (21) can clearly be seen. As stated hereinbefore, the flow (24) of exhaust gases enter the after-treatment system (21) through the inlet (19) and then is directed to a Diesel Oxidation Catalyst (22) or DOC. After going through the Diesel Oxidation Catalyst (22) the flow (24) of exhaust gases is directed to a Diesel Particulate Filter (9) or DPF, which can be serviced after removing the service lid (1) as described hereinafter. The after-treatment system (21) of this first exemplary embodiment comprises a mixing unit (25) downstream of the Diesel Particulate Filter (9). Said mixing unit (25) may be configured to evaporate a liquid spray and subsequently mix it into the flow (24) of exhaust gases. Said liquid may be an aqueous urea solution or similar. After the mixing unit (25) and prior to exiting the after-treatment system through the outlet (20) the flow (24) of exhaust gases passes through a Selective Catalytic Reduction catalyst (26) or SCR.

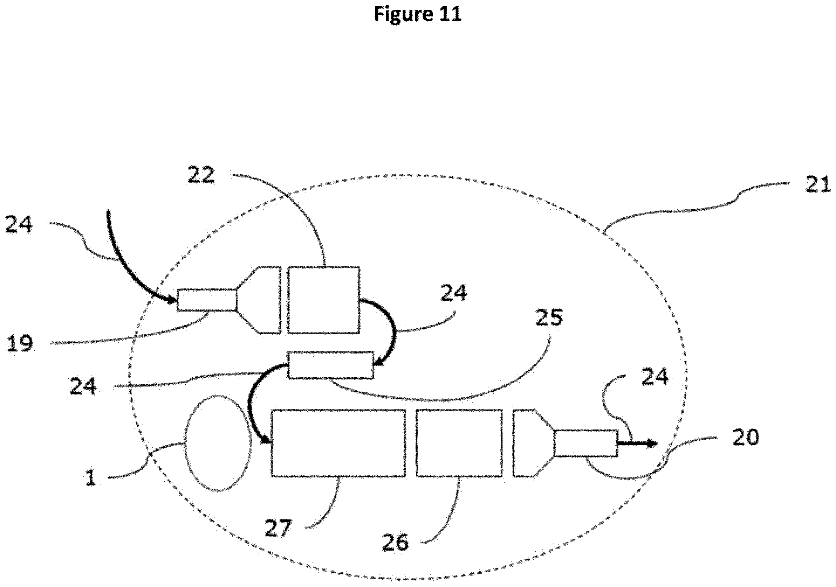

Figure 11 shows schematically a second exemplary embodiment of an after-treatment system of exhaust gases according to the present invention. Similarly, to the first exemplary embodiment, in this second exemplary embodiment the flow (24) of exhaust gases is directed to a Diesel Oxidation Catalyst (22) after entering the after-treatment system (21) through the inlet (19). From the Diesel Oxidation Catalyst (22) the flow (24) of exhaust gases is directed to a mixing unit (25) which may be configured to evaporate a liquid spray of a solution of aqueous urea or similar into the flow (24) of exhaust gases. Downstream of the mixing unit (25) there is an end-out service filter device according to the present invention which comprises a Selective Catalytic Reduction catalyst on Filter (F-SCR), and more particularly, a Selective Catalytic Reduction catalyst on a Diesel Particulate Filter (27). Said Selective Catalytic Reduction catalyst on a Diesel Particulate Filter (27) can be serviced after removing the service lid (1) as described hereinafter. After exiting the Selective Catalytic Reduction catalyst on a Diesel Particulate Filter (27) and prior to exiting the exhaust after-treatment system (27) through the outlet (20), the flow (24) of exhaust gases passes through a Selective Catalytic Reduction catalyst (26).

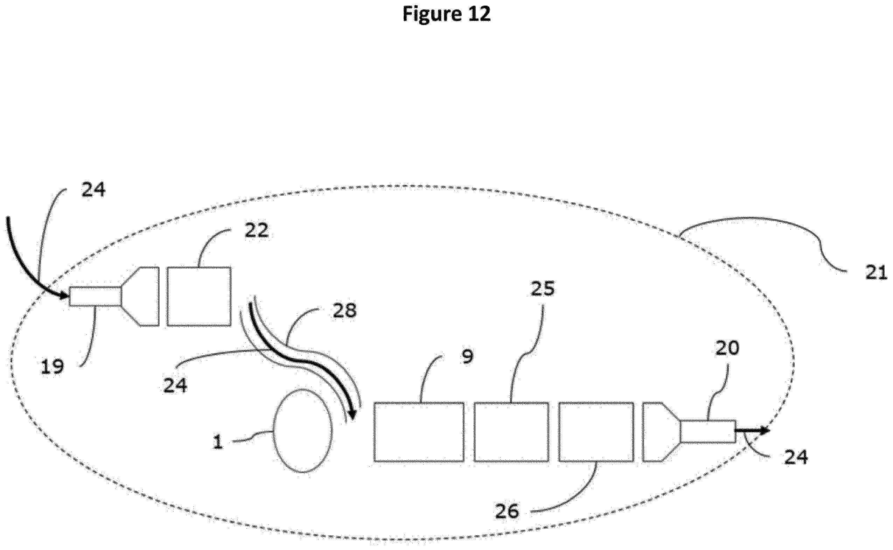

Figure 12 shows schematically a third exemplary embodiment of an after-treatment system of exhaust gases according to the present invention. In the third exemplary embodiment the flow (24) of exhaust gases enters the exhaust after-treatment system (21) through the inlet (19) and is directed to a Diesel Oxidation Catalyst (22). From the Diesel Oxidation Catalyst (22) the flow (24) of exhaust gases is directed to an end-out service filter device according to the present invention through a connecting pipe (28). In this third exemplary embodiment, the end-out service filter device of the after-treatment system (21) comprises a Diesel Particulate Filter (9), which can be serviced after removal of the service lid (1) as described hereinafter. The after-treatment system (21) of this exemplary embodiment comprises a mixing unit (25) downstream of the Diesel Particulate Filter (9). Said mixing unit (25) may be configured to evaporate a liquid spray and subsequently mix it into the flow (24) of exhaust gases. Said liquid may be an aqueous urea solution or similar. After passing through the mixing unit (25) and before exiting the after-treatment system (21) through the outlet (20), the flow (24) of exhaust gases passes through a Selective Catalytic Reduction catalyst (26).

A method for servicing an end-out service filter device as described hereinabove will be described with reference to the exemplary embodiment of an end-out service filter device shown in Figures 1 to 7. A method for servicing an end-out service filter device for an exhaust after-treatment system of a combustion engine may comprise the following steps:
a. Loose the external V-clamp (4), which fixes the removable service lid (1) to a service opening (25).
b. Remove said removable service lid (1) so that the service opening (25) is opened.
c. Loose the internal V-clamp (6), which fixes the removable filter unit (7) to a filter unit housing (5).
d. Remove the removable filter unit (7) from the filter unit housing (5) through the service opening (5).
e. Service or replace the removable filter unit (7).
f. Insert the serviced or replaced removable filter unit (7) to the filter unit housing (4) through the service opening (25).
g. Secure the internal V-clamp (6).
h. Place the removable service lid (1) on the service opening (25) so that said service opening (25) is closed.
i. Secure the external V-clamp (4).

The filter unit (7) is extracted and inserted through the service opening (25) following the longitudinal axis of said filter unit (7), that is to say, following the longitudinal axis of the filter unit housing (5).

## Claims

1. End-out service filter device for an exhaust after-treatment system (21) of a combustion engine comprising a removable filter unit (7) attached to a filter unit housing (5) via filter unit fixing means, a flow transfer device (3) which comprises a main flow deflecting wall configured to deflect exhaust gases of the combustion engine exiting or entering the filter unit, wherein the flow deflecting wall comprises a removable lid (1) attached to said main flow deflecting wall via lid fixing means, said removable lid (1) closing a service opening (25) facing said filter unit for removing and/or inserting said filter unit through the service opening (25), **characterised in that** the removable lid (1) comprises guiding means for correctly positioning said removable lid (1) on the service opening (25), said guiding means comprise a protrusion (26) located in the service opening (25) which fits a respective recess in the removable lid (1).

2. End-out service filter device according to claim 1, **characterised in that** the lid fixing means comprise a V-clamp (4).

3. End-out service filter device according to claim 2, **characterised in that** the lid fixing means further comprise a gasket (13).

4. End-out service filter device according to any one of the preceding claims, **characterised in that** the filter unit fixing means comprise a V-clamp (6).

5. End-out service filter device according to claim 4, **characterised in that** the filter unit fixing means further comprise a gasket (14).

6. End-out service filter device according to any one of the preceding claims, **characterised in that** it further comprises an end baffle (2).

7. End-out service filter device according to claim 6, **characterised in that** the service opening (25) is defined by a flange of the end baffle (2).

8. End-out service filter device according to any one of claims 1 to 6, **characterised in that** the service opening (25) is defined by a flange of the flow transfer device (3).

9. End-out service filter device according to any one of the preceding claims, **characterised in that** the service lid comprises insulation (10).

10. End-out service filter device according to any one of the preceding claims, **characterised in that** the service lid comprises a wall that is arranged such that it deflects the exhaust gases of the combustion engine.

11. End out service filter device according to any one of the preceding claims, **characterised in that** it further comprises a support ring (11) for the filter unit (7).

12. End-out service filter device according to any one of the preceding claims, **characterised in that** the flow transfer device (3) comprises insulation.

13. End-out service filter device according to any one of the preceding claims, **characterised in that** the outlet of the filter unit housing (5) is located inside the flow transfer device (3).

14. End-out service filter device according to any one of the preceding claims **characterised in that** the filter unit (7) comprises a Diesel Particulate Filter (9).

15. End-out service filter device according to any one of claims 1 to 14, **characterised in that** the filter unit (7) comprises a Selective Catalytic Reduction catalyst on Filter.

16. End-out service filter device according to any one of claims 1 to 15, **characterised in that** the filter unit (7) comprises a catalytic element.

## Patentansprüche

1. Axial zur Filterströmungsachse betriebene Wartungsfiltervorrichtung für ein Abgasnachbehandlungssystem (21) eines Verbrennungsmotors, umfassend eine abnehmbare Filtereinheit (7), die über ein Filtereinheitsbefestigungsmittel an einem Filtereinheitsgehäuse (5) befestigt ist, eine Strömungsübertragungsvorrichtung (3), welche eine Hauptströmungsablenkwand umfasst, die konfiguriert ist, um Abgase des Verbrennungsmotors, die die Filtereinheit verlassen oder in diese eintreten, abzulenken, wobei die Strömungsablenkwand einen abnehmbaren Deckel (1) umfasst, der über ein Deckelbefestigungsmittel an der Hauptströmungsablenkwand befestigt ist, wobei der abnehmbare Deckel (1) eine Wartungsöffnung (25) verschließt, die der Filtereinheit zugewandt ist, um die Filtereinheit durch die Wartungsöffnung (25) zu entfernen und/oder einzusetzen, **dadurch gekennzeichnet, dass** der abnehmbare Deckel (1) ein Führungsmittel zum korrekten Positionieren des abnehmbaren Deckels (1) auf der Wartungsöffnung (25) umfasst, wobei das Führungsmittel einen Vorsprung (26) umfasst, der sich in der Wartungsöffnung (25) befindet und in eine entsprechende Ausnehmung in dem abnehmbaren Deckel (1) passt.

2. Axial zur Filterströmungsachse betriebene Wartungsfiltervorrichtung nach Anspruch 1, **dadurch gekennzeichnet, dass** das Deckelbefestigungsmittel eine V-Klemme (4) umfasst.

3. Axial zur Filterströmungsachse betriebene Wartungsfiltervorrichtung nach Anspruch 2, **dadurch gekennzeichnet, dass** das Deckelbefestigungsmittel ferner eine Dichtung (13) umfasst.

4. Axial zur Filterströmungsachse betriebene Wartungsfiltervorrichtung nach einem der vorhergehenden Ansprüche, **dadurch gekennzeichnet, dass** das Filtereinheitsbefestigungsmittel eine V-Klemme (6) umfasst.

5. Axial zur Filterströmungsachse betriebene Wartungsfiltervorrichtung nach Anspruch 4, **dadurch gekennzeichnet, dass** das Filtereinheitsbefestigungsmittel ferner eine Dichtung (14) umfasst.

6. Axial zur Filterströmungsachse betriebene Wartungsfiltervorrichtung nach einem der vorhergehenden Ansprüche, **dadurch gekennzeichnet, dass** sie ferner eine Endblende (2) umfasst.

7. Axial zur Filterströmungsachse betriebene Wartungsfiltervorrichtung nach Anspruch 6, **dadurch gekennzeichnet, dass** die Wartungsöffnung (25) durch einen Flansch der Endblende (2) definiert ist.

8. Axial zur Filterströmungsachse betriebene Wartungsfiltervorrichtung nach einem der Ansprüche 1 bis 6, **dadurch gekennzeichnet, dass** die Wartungsöffnung (25) durch einen Flansch der Strömungsübertragungsvorrichtung (3) definiert ist.

9. Axial zur Filterströmungsachse betriebene Wartungsfiltervorrichtung nach einem der vorhergehenden Ansprüche, **dadurch gekennzeichnet, dass** der Wartungsdeckel eine Isolierung (10) umfasst.

10. Axial zur Filterströmungsachse betriebene Wartungsfiltervorrichtung nach einem der vorhergehenden Ansprüche, **dadurch gekennzeichnet, dass** der Wartungsdeckel eine Wand umfasst, die so angeordnet ist, dass sie die Abgase des Verbrennungsmotors ablenkt.

11. Axial zur Filterströmungsachse betriebene Wartungsfiltervorrichtung nach einem der vorhergehenden Ansprüche, **dadurch gekennzeichnet, dass** sie ferner einen Stützring (11) für die Filtereinheit (7) umfasst.

12. Axial zur Filterströmungsachse betriebene Wartungsfiltervorrichtung nach einem der vorhergehenden Ansprüche, **dadurch gekennzeichnet, dass** die Strömungsübertragungsvorrichtung (3) eine Isolierung umfasst.

13. Axial zur Filterströmungsachse betriebene Wartungsfiltervorrichtung nach einem der vorhergehenden Ansprüche, **dadurch gekennzeichnet, dass** der Auslass des Filtereinheitsgehäuses (5) innerhalb der Strömungsübertragungsvorrichtung (3) angeordnet ist.

14. Axial zur Filterströmungsachse betriebene Wartungsfiltervorrichtung nach einem der vorhergehenden Ansprüche, **dadurch gekennzeichnet, dass** die Filtereinheit (7) einen Dieselpartikelfilter (9) umfasst.

15. Axial zur Filterströmungsachse betriebene Wartungsfiltervorrichtung nach einem der Ansprüche 1 bis 14, **dadurch gekennzeichnet, dass** die Filtereinheit (7) einen Katalysator für selektive katalytische Reduktion auf dem Filter umfasst.

16. Axial zur Filterströmungsachse betriebene Wartungsfiltervorrichtung nach einem der Ansprüche 1 bis 15, **dadurch gekennzeichnet, dass** die Filtereinheit (7) ein katalytisches Element umfasst.

## Revendications

1. Dispositif de filtre de maintenance à fonctionnement axial à l'axe de flux de filtre pour un système de post-traitement des gaz d'échappement (21) d'un moteur à combustion comprenant une unité de filtre amovible (7) attachée à un boîtier d'unité de filtre (5) via un moyen de fixation d'unité de filtre, un dispositif de transfert de flux (3) qui comprend une paroi de déviation de flux principale configurée pour dévier les gaz d'échappement du moteur à combustion sortant ou entrant dans l'unité de filtre, dans lequel la paroi de déviation de flux comprend un couvercle amovible (1) attaché à ladite paroi de déviation de flux principale via un moyen de fixation de couvercle, ledit couvercle amovible (1) fermant une ouverture de maintenance (25) faisant face à ladite unité de filtre pour retirer et/ou insérer ladite unité de filtre à travers l'ouverture de maintenance (25), **caractérisé en ce que** le couvercle amovible (1) comprend un moyen de guidage pour positionner correctement ledit couvercle amovible (1) sur l'ouverture de maintenance (25), ledit moyen de guidage comprend une saillie (26) située dans l'ouverture de maintenance (25) qui s'adapte à un évidement respectif dans le couvercle amovible (1).

2. Dispositif de filtre de maintenance à fonctionnement axial à l'axe de flux de filtre selon la revendication 1, **caractérisé en ce que** le moyen de fixation de couvercle comprend un collier en V (4).

3. Dispositif de filtre de maintenance à fonctionnement axial à l'axe de flux de filtre selon la revendication 2, **caractérisé en ce que** le moyen de fixation de couvercle comprend en outre un joint (13).

4. Dispositif de filtre de maintenance à fonctionnement axial à l'axe de flux de filtre selon l'une quelconque des revendications précédentes, **caractérisé en ce que** le moyen de fixation de l'unité de filtre comprend un collier en V (6).

5. Dispositif de filtre de maintenance à fonctionnement axial à l'axe de flux de filtre selon la revendication 4, **caractérisé en ce que** le moyen de fixation de l'unité de filtre comprend en outre un joint (14).

6. Dispositif de filtre de maintenance à fonctionnement axial à l'axe de flux de filtre selon l'une quelconque des revendications précédentes, **caractérisé en ce qu'**il comprend en outre un déflecteur d'extrémité (2).

7. Dispositif de filtre de maintenance à fonctionnement axial à l'axe de flux de filtre selon la revendication 6, **caractérisé en ce que** l'ouverture de maintenance (25) est définie par une bride du déflecteur d'extrémité (2).

8. Dispositif de filtre de maintenance à fonctionnement axial à l'axe de flux de filtre selon l'une quelconque des revendications 1 à 6, **caractérisé en ce que** l'ouverture de maintenance (25) est définie par une bride du dispositif de transfert de flux (3).

9. Dispositif de filtre de maintenance à fonctionnement axial à l'axe de flux de filtre selon l'une quelconque des revendications précédentes, **caractérisé en ce que** le couvercle de maintenance comprend une isolation (10).

10. Dispositif de filtre de maintenance à fonctionnement axial à l'axe de flux de filtre selon l'une quelconque des revendications précédentes, **caractérisé en ce que** le couvercle de maintenance comprend une paroi qui est agencée de telle sorte qu'elle dévie les gaz d'échappement du moteur à combustion.

11. Dispositif de filtre de maintenance à fonctionnement axial à l'axe de flux de filtre selon l'une quelconque des revendications précédentes, **caractérisé en ce qu'**il comprend en outre un anneau de support (11) pour l'unité de filtre (7).

12. Dispositif de filtre de maintenance à fonctionnement axial à l'axe de flux de filtre selon l'une quelconque des revendications précédentes, **caractérisé en ce que** le dispositif de transfert de flux (3) comprend une isolation.

13. Dispositif de filtre de maintenance à fonctionnement axial à l'axe de flux de filtre selon l'une quelconque des revendications précédentes, **caractérisé en ce que** la sortie du boîtier de l'unité de filtre (5) est située à l'intérieur du dispositif de transfert de flux (3).

14. Dispositif de filtre de maintenance à fonctionnement axial à l'axe de flux de filtre selon l'une quelconque des revendications précédentes, **caractérisé en ce que** l'unité de filtre (7) comprend un filtre de particules diesel (9).

15. Dispositif de filtre de maintenance à fonctionnement axial à l'axe de flux de filtre selon l'une quelconque des revendications 1 à 14, **caractérisé en ce que** l'unité de filtre (7) comprend un catalyseur de réduction catalytique sélective sur le filtre.

16. Dispositif de filtre de maintenance à fonctionnement axial à l'axe de flux de filtre selon l'une quelconque des revendications 1 à 15, **caractérisé en ce que** l'unité de filtre (7) comprend un élément catalytique.
